(19) Europäisches Patentamt
European Patent Office
Office européen des brevets

(11) **EP 2 075 663 B1**

(12) **EUROPEAN PATENT SPECIFICATION**

(45) Date of publication and mention
of the grant of the patent:
**16.11.2016 Bulletin 2016/46**

(51) Int Cl.:
***G05B 23/02*** *(2006.01)*

(21) Application number: **07124071.7**

(22) Date of filing: **27.12.2007**

(54) **Method and device for predictive wear analysis of components in use on a vehicle,in particular an industrial or commercial vehicle**

Verfahren und Gerät zur prädiktiven Verschleiss-Analyse von Fahrzeugkomponenten insbesondere eines Nutzfahrzeugs

Procédé et dispositif pour l'analyse predictive de l'usure des components d'un véhicule,en particulier d'un véhicule  utilitaire

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**01.07.2009 Bulletin 2009/27**

(73) Proprietor: **IVECO S.p.A.
10156 Torino (IT)**

(72) Inventors:
• **Poletto, Paolo
10095, GRUGLIASCO (IT)**
• **Varalda, Orlando
10088, VOLPIANO (IT)**

(74) Representative: **Franzolin, Luigi et al
Studio Torta S.p.A.
Via Viotti, 9
10121 Torino (IT)**

(56) References cited:
**WO-A-2004/049161      US-B1- 6 411 908
US-B1- 6 636 814**

• **JUN ET AL: "Predictive algorithm to determine the suitable time to change automotive engine oil" COMPUTERS & INDUSTRIAL ENGINEERING, PERGAMON, vol. 51, no. 4, 22 November 2006 (2006-11-22), pages 671-683, XP005775177 ISSN: 0360-8352**

**Description**

The present invention refers to a method and device for predictive wear analysis of components in use on a vehicle, in particular an industrial or commercial vehicle.

In heavy goods vehicles, wear of components, especially those most costly and critical with regard to the correct maintenance thereof, can create serious problems of reliability both of these components, and of the more complex systems in which they are integrated. In fact, excessive wear of a basic component, such as a clutch plate, can cause damage to the entire clutch assembly. Moreover, excessive wear of a brake lining can result in dangerous damage to the brake assembly, even compromising the safety of the vehicle.

This leads to problems in the reliability of the behaviour of the vehicle in use, with the risk of sudden breakdown due to faulty components.

Moreover, there are common situations in which programmed maintenance contracts are drawn up for a vehicle, which make it necessary to become aware of risky situations caused by excessive wear of components subject to wear in good time, so as to minimize the cost and the operations required for replacement thereof, which must therefore be carried out promptly.

Some measures to detect the wear of certain components are known. For example, the positioning of appropriate wear detection and signalling means, such as appropriate sensors positioned in the component connected to warning lamps that light up when a predetermined level of wear of the component (i.e. the brake shoe) is reached, is known.

However, prior art does not allow monitoring of the trend in time of the level of wear of the component, from which the most appropriate moment for replacement thereof can be determined, before reaching a dangerous condition of excessive wear.

WO2004049161 discloses a method for monitoring of the level of wear of a component. A microprocessor is connected with a sensor able to measure a charachteristic od said component. Tne microprocessor is configured to retrieve the statistical data from a database, and to analyze the value of said characteristic and the statistical data to calculate or determine an indication of the remaining useful life of the component or system.

Therefore, the object of the present invention is to overcome all the aforesaid drawbacks and to indicate a method and device for predictive wear analysis of components in use on a vehicle, in particular an industrial or commercial vehicle, which is suitable to link the driving style and the vehicle mission with the wear curve of components, in order to prevent sudden vehicle breakdown for excessive damage due to wear of a component, or in any case to allow full use of the component.

The object of the present invention is a process for predictive wear analysis of a component in use on a vehicle, in particular an industrial or commercial vehicle, as defined in claim 1.

Another object of the present invention is a device for implementation of the process, characterized in that it comprises:

- sensors, actuators or detectors of the values measured;
- at least a vehicle control unit that collects and processes said values, appropriately programmed;
- means to issue a warning message when said estimated value of residual life of the component exceeds a threshold value.

A particular object of the present invention is a method and device for predictive wear analysis of components in use on a vehicle, in particular an industrial or commercial vehicle, as better described in the claims, which form an integral part of the present description..

By means of the present invention, it is thus possible to:

- Monitor the driving style through the stresses imparted to the components;
- Periodically check the components in order to minimize risky situations;
- Identify the useful life of the component as a function of its real use.

More in particular, the objects of predictive wear analysis achieved by the present invention are:

- decrease in the cases of risky use of the vehicle with worn components;
- maximization of the working life of the component reducing the cost per km
- for the vehicle;
- implementation of predictive maintenance plans related to the real use of the vehicle;
- feedback of useful information to designers for product improvements;
- feedback of useful information to the user in order to optimize driving style;
- decrease in running costs for the user;

- decrease in environmental impact through optimization of vehicle use;
- identification of unauthorized modifications to vehicle performances.

A further advantage is determined as regards optimization of the management of programmed maintenance contracts, so that the worn element can be changed in time to prevent further damages, obtaining better scheduling of the intervals to call the vehicle in for maintenance operations under warranty. It is also possible to identify errors of the driver to reduce the costs for worn spare parts.

Moreover, by periodically checking the component, wear prediction can be realigned with respect to the initial prediction, for any variations in conditions of type of use of the vehicle (vehicle mission) to maintain the prediction constant and realistic at all times and to maximize component life.

Further objects and advantages of the present invention will be apparent from the detailed description below of an example of embodiment thereof (and of its variants) and from the appended drawings provided purely by way of non-limiting example, wherein:

Figure 1 indicates an operational flow chart of the method of the present invention.

Figures 2.1, 2.2 and 2.3 show an example of a statistical accumulator relative to a clutch.

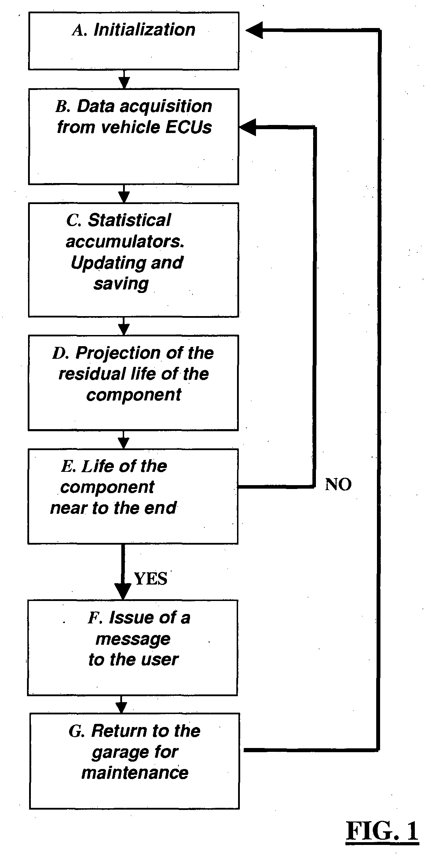

In accordance with the present invention, predictive wear analysis for vehicle components in use is based on identification of the link between wear and driving style. Analysis is performed during use of the components being examined with the vehicle in use, on the basis of the following operational flow, with reference to Figure 1, in which the macro operations performed are listed.

Said operations are performed, for example, by means of a program stored in a vehicle control unit. The programming method and language of the vehicle control unit can be of a type known per se.

A) Phase of Initialization.

For each component to be analyzed for predictive wear specific parameters appropriately stored in the control unit are available:

- Start of life parameters: characteristics that identify the component when it is new, for the clutch the initial thickness of the plate.
- End of life parameters: warning and end of life thresholds of the component, for the clutch the warning and minimum thickness of the plate for its end of life.
- Vehicle mission and configuration: for example, heavy, mixed, superhighway, urban, yard, etc... Coefficients that characterize each vehicle mission and configuration are associated therewith.

Moreover, count / check / calculation registers are initialized and the unit of measurement in which the residual life will be indicated is established: e.g. hours or km.

B) Phase of Data acquisition by vehicle control units

At regular and preset time intervals the vehicle control units perform measurements of size relative to said components in use, which are statistically accumulated. The measurements can concern both intrinsic characteristics of the component being examined and vehicle values (i.e. temperature, torque, no. of engine revolutions, etc...).

Measurements are acquired on the basis of values detected by appropriate means for detecting and reporting component wear, such as appropriate sensors positioned in this component, or other vehicle sensors or indicators.

C) Phase of Updating and saving in statistical accumulators.

The size measurements performed in the previous step are stored in statistical accumulators as events that occurred at the times of detection, that is, how many times this measurement was within predetermined threshold values, for example how many times an acceleration was performed with the engine speed between two different revolution speed thresholds.

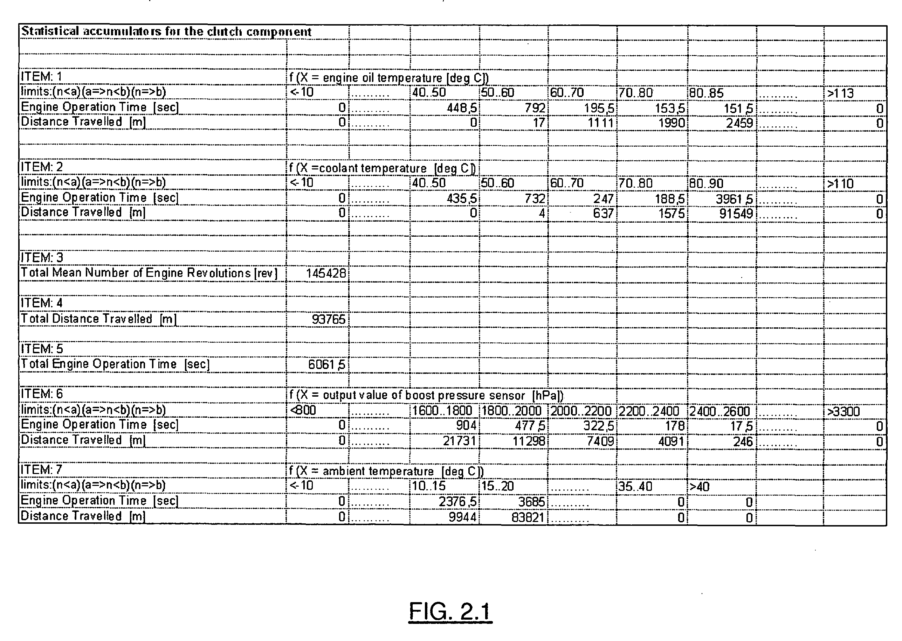

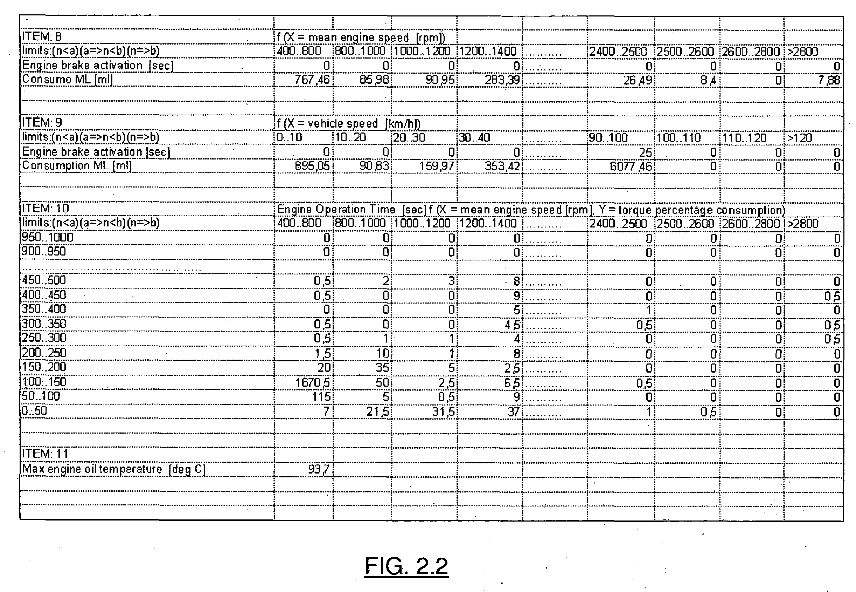

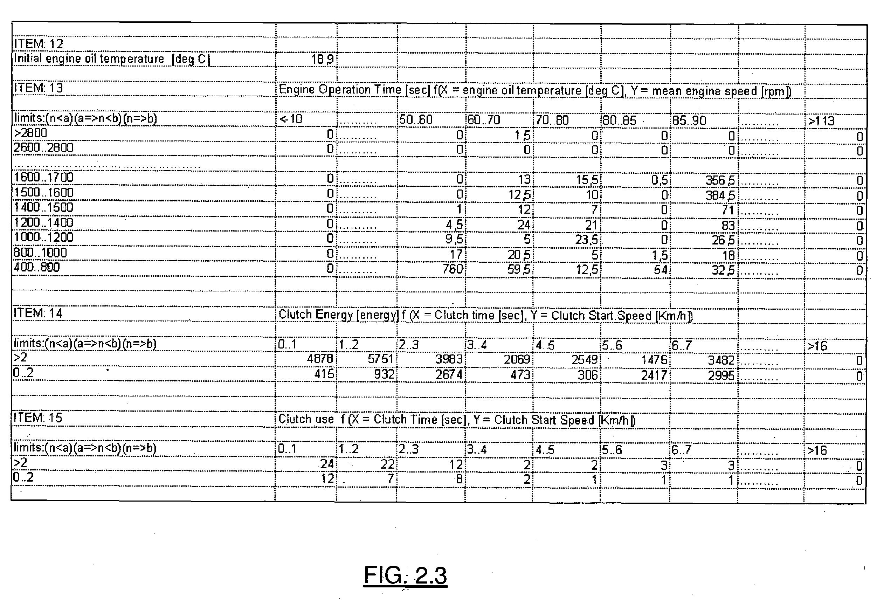

For example, with reference to the clutch, as will be seen in greater detail below with reference to Figures 2.1, 2.2 and 2.3, vehicle measurements such as those below are collected and logged.

First measurement: quantity of energy involved during clutch use and relative duration:

- Item 12 and 14: these two statistical accumulators respectively contain the quantity of energy exchanged according to the clutch use time and the number of clutch uses and whether it was used to start with the vehicle stopped or moving (speed = 0 or greater than zero).

(Note: the counters are reset when a new clutch is installed).

Second measurement: identification of the effective vehicle mission:

- Item 1, 2, 8, 9, 10: these respectively count the running temperature of the engine, the engine and vehicle speed and finally how the engine was used in terms of required performances, i.e. torque in time with respect to revolutions and therefore power delivered. Updating and relative interpretation of these counters will allow identification of the vehicle mission.

D) Phase of Projection of the residual life of the component.

Using a deterioration model represented by the function "f(vehicle measurements)" obtained from predictive wear analysis, which will be explained in greater detail below, through the logged data it is possible to obtain an indication of the residual life of the component.
In fact, it was said that in the step indicated in point C) data are collected in the statistical accumulators.
These data are processed so as to provide, for example, indication of the effective vehicle mission in travel, in relation to the one provided as initial parameter, for example of the types:

- urban, characterized by low speeds, high demands for torque and low oil temperatures, frequent clutch use starting from zero speed, that is, from stopped.
- mixed or long distance, characterized by high variance in speed (variance is intended as the statistical variance around the mean value), average torques and variable oil temperature in time, frequent clutch use during gear change, and therefore with the vehicle moving, that is, a speed differing from zero.
- Superhighway, characterized by constant speeds, average torque with low variance, medium-high oil temperature, low clutch use.

Another indication obtainable is the one relative to predictive wear of the clutch.
The data accumulated as described above statistically identify the stresses imparted to the component, allowing functions such as those indicated below with [1], [2], [3], [4] and [5] to be obtained, and therefore allowing measurement of the quantity of friction material utilized in time, i.e. the rate of wear, which, compared with the quantity of material available, will allow estimation of the residual duration.

E) Phase of Checking whether the residual life of the component is nearing its end.

The various residual life estimation values, or their inverses the levels of wear, are in turn logged, in the sense of storing successive samples of the estimations of the various values obtained by the aforesaid mathematical functions. This provides the mean predictive indication of wear, and therefore the prediction of when the residual life value will exceed the threshold of acceptability, i.e. the predetermined end of life threshold.
The result of the calculation is expressed in terms of hours of operation or residual km to be travelled, taking account of the previously established thresholds of acceptability.

F) Phase of issue of a message to the user.

One result of the operations performed above can be the issue of a message to warn the user.
There are many methods of issuing a message to the user, for example a warning signal on the instrument panel that recommends a visit to the garage within an interval of time or km, for maintenance operations and to thus restore the initial conditions.
Below is a exemplifying description of how the functions for predictive wear analysis of vehicle components are identified, taking the clutch component as example.
The choice as example of component to be analyzed is motivated by the fact the clutch is a component not subject to periodic maintenance but only to visual checking; in fact, prompt checking of wear that does not allow objective indications of its residual duration is performed, and damage thereto could also lead to damage of all the parts forming the clutch assembly causing economic damages and putting the vehicle off the road.
Technically, the clutch is the mechanical member that allows the engine, which generates the torque, to engage with - disengage from the transmission members with the characteristic of being able to perform this operation progressively and smoothly.

The cycle takes place through rubbing of metal parts interposed between which is a plate covered with a suitable friction material (clutch plate), a much softer material than the material of the flywheel and pressure plate and therefore subject to more rapid wear; this is the object of the predictive wear analysis, and is directly proportional to the duration and to the torque transferred in time, i.e. the energy.

Therefore, it can be defined that the quantity of friction material (in mum3) available for the clutch plate is the quantity required to exchange a finite quantity of energy (for example, expressed in MJ).

When the thickness, therefore the quantity, of the friction material decreases below a threshold dictated by the project, the clutch must be considered as worn and to be replaced; the objective is being able to predict when to replace the clutch plate as a function of the time elapsed.

To summarize: the stresses imparted to the clutch are the torque generated by the engine during clutch use, duration thereof, and the rotation speed of the engine.

The value of Exchanged Energy is proportional to the product

Torque * Revolutions * Time of clutch use.

To analyze clutch deterioration and obtain the function "f(vehicle measurements)" representing the deterioration model, experimentation is relied on whose results are stored in one or more statistical accumulators developed to take account of evolution of the operating conditions of the component being examined, that is, how many times the component was subjected to a stress or the amount of time or energy that was involved, or in which conditions (i.e. values of temperature, torque, no. of revolutions, the items are those mentioned previously), and each interval predicted for the accumulator is identified on the basis of the homogeneity of the behaviour of the component within this interval.

Therefore, for example to monitor and store the energy involved in clutch uses with respect to the durations, the statistical accumulator obtained from items 12, 14 in Figures 2.1, 2.2 and 2.3 is used, defined by a total of time intervals each of which representing a possible duration of clutch use. The accumulator will count the total energy involved during all clutch uses and each interval will contain the relative detail.

For clutch uses with a duration below the minimum duration of clutch use predicted or above the maximum duration, the total energy involved is counted.

With reference to Figures 2.1, 2.2, 2.3, an example of data accumulated is indicated on the basis of the Statistical Accumulator provided for the clutch. Some initial parameters are defined, such as:

- sampling frequency, i.e. 500 ms;
- instants of start and end of detections,

The data accumulated refer to types indicated with ITEM, from 1 to 15 in the figures, which should be referred to for the relative definitions, detected with the indicated sampling frequency.

The predictive wear model is implemented by relating the energies involved weighted on the duration (data contained in the statistical accumulator item 14 and 15, and for vehicle mission items 1, 2, 8, 9, 10), with the physical measurement of deterioration of the clutch, i.e. thinning thereof.

Experiments allow the behaviour statistics and wear measurement of the component to be obtained, which are correlated to identify the following functions:

$$[1] \ \Delta mm^3 \text{ lost for each cycle} = f(\text{driving style}) * MJ \text{ involved, i.e.}$$

$$[2] \ \Delta mm^3 \text{ lost for each cycle} = f(\text{vehicle mission}) * f(\text{energy involved}) * f(T \text{ clutch use}) = f(\text{vehicle measurements})$$

The estimation of clutch duration can be indicated in:

$$[3] \ Time = f(\text{driving style}) * \Delta mm^3 \text{ lost for each cycle} * \text{no. of clutch uses.}$$

$$[4] \ mm^3\_residual = mm^3\_initial - \Delta mm^3 \text{ lost for each cycle}$$

Through statistical analysis, for example with known methods called "best-fit" or "X$^2$ Chi Square", on the basis of the data acquired the function "f(ehicle measurements)" is determined, which expresses the deterioration model from which indication of residual life of the component is obtained.

Therefore, by knowing the clutch in its initial state, it is possible, through successive differences, to calculate the residual life.

Ultimately, from [2] we obtain for the clutch:

$$[5]\ ResidualClutchLife = K - f(vehicle\ mission) * f(vehicle\ measurements)$$

Where:

- the function f(vehicle *mission*) providing the indication of the type of vehicle mission travelled is a corrective coefficient.
- K = State of the new clutch (i.e. thickness or mm$^3$ of material)
- f(vehicle measurements) is the deterioration model.

The example described shows a use of the predictive wear analysis method applied to a specific component, that is, the clutch. This possibility of correlating the mode of use of the vehicle with the deterioration of a component can be applied to different vehicle components, such as brakes, starter motor, batteries, electropneumatic systems, filter elements, etc...

With regard to a possible device embodying the method forming the object of the invention, it comprises all the normal sensors, actuators or detectors of the measured values, some of which are already present and available while others must be provided according to need.

Moreover, at least a vehicle control unit that collects and processes these values is provided, appropriately programmed to implement the aforesaid method. The device is also provided with appropriate means to report the result of the aforesaid analysis, such as:

Warning lamp on the instrument panel to indicate that a maintenance operation is required;
Indicator of the residual life values of the components examined;
Indicator of the plans for return to the garage, dynamically updated, which informs the user when to go to the garage for the necessary check-ups, no longer scheduled, but according to the actual wear of the component.

The present invention can be advantageously produced through a computer program, appropriately stored for example in a vehicle control unit, comprising coding means for the implementation of one or more steps of the method, when this program is made to run on a computer. Therefore the scope of protection extends to said computer program and moreover to means readable by computers comprising a recorded message, said means readable by computers comprising program coding means for the implementation of one or more steps of the method, when said program is made to run on a computer.

Variants of embodiment of the non-limiting example described are possible, without however departing from the scope of protection of the present invention, comprising all equivalent embodiments for those skilled in the art.

From the description above those skilled in the art are able to implement the object of the invention without introducing further constructional details.

**Claims**

1. Method for predictive wear analysis of a component in use on a vehicle, in particular an industrial or commercial vehicle, **characterized in that** it comprises the following steps:

- initialization: parameters are provided for said component to be analyzed, identifying at least: start of life characteristics; end of life characteristics; warning and end of life thresholds of the component; vehicle mission type and configuration coefficients;
- data acquisition: measurements of magnitudes relative to said components in use are performed at regular and predetermined time intervals, which are statistically accumulated;
- updating and saving in statistical accumulators: storing of the measurements performed as events occurring at the times of detection, i.e. the number of times said measurements fall within thresholds of predetermined values;

- projection and check of the residual life of the component: the residual life values, or their inverses the wear levels, are logged; a wear rate is calculated on the total of said values and an estimated value of the residual life of the component is obtained correlating it to residual operating values,

said step for projection and check of the residual life of the components comprises the steps of:

- projection of the residual life of the component: said measurements performed are interpreted analytically through statistical calculation, by means of which a mathematical function "f(vehicle measurements)" is determined, which expresses a deterioration model, that is, indicating the residual life of the component;
- checking whether the residual life of the component is nearing its end: said values indicating residual life, or their inverses the levels of wear, are in turn logged, storing successive samples of the estimations, at least the most recent ones, of the various values of the function "f(vehicle measurements)"; a wear speed is determined from the total of said successive values, and therefore a prediction of when the residual life value will exceed a predetermined end of life threshold, thus obtaining said estimated value of the residual life of the component,

**characterized in that** in the case of vehicle clutch component, said mathematical function "f(vehicle measurements)" is determined on the basis of the following functions, obtained from analyzing the data stored in said statistical accumulators:

$$[1] \; \Delta mm^3 \text{ lost for each cycle} = f(\text{driving style}) \; * \; MJ \text{ involved}$$

or

$$[2] \; \Delta mm^3 \text{ lost for each cycle} = f(\text{vehicle mission}) \; * \; f(\text{energy involved}) \; * \; f(T \text{ clutch use}) = f(\text{vehicle measurements})$$

Wherein

- "energy involved" is a finite quantity of energy (MJ),
- the function f(vehicle mission) providing the indication of the type of vehicle mission travelled is a corrective coefficient
- f(vehicle measurements) is a deterioration model.

**2.** Method as claimed in claim 1, **characterized in that** said estimation of residual life of the clutch is indicated in:

$$[3] \; \text{Time} = f(\text{driving style}) \; * \; \Delta mm^3 \text{ lost for each cycle} \; * \; \text{no. of clutch uses.}$$

$$[4] \; mm^3\_\text{residual} = mm^3\_\text{initial} - \Delta mm^3 \text{ lost for each cycle}$$

$$[5] \; \text{ResidualClutchLife} = K - f(\text{vehicle mission}) \; * \; f(\text{vehicle measurements})$$

Where:

- K = State of the new clutch (i.e. thickness or $mm^3$ of material).

**3.** Method as claimed in claim 1, **characterized in that** said statistical calculation is performed using any one of the methods called "best-fit" or "$X^2$ Chi Square".

**4.** Method as claimed in claim 1, **characterized in that** said initialization step also comprises initialization of count / check / calculation registers and establishment of the unit of measurement in which the residual life will be indicated.

5. Method as claimed in claim 1, **characterized in that** in said data acquisition step said measurements of size comprise measurements both of intrinsic characteristics of the component being examined and vehicle values.

6. Method as claimed in claim 1, **characterized in that** said estimated value of the residual life of the component is expressed in terms of hours of operation or residual km to be travelled.

7. Method as claimed in any one or the preceding claims, **characterized in that** it also comprises a step to issue a warning message when said estimated value of residual life of the component exceeds a threshold value.

8. Device for the implementation of the method as claimed in any one of the preceding claims, **characterized in that** it comprises:

- sensors, actuators or detectors of the values measured;
- at least a vehicle control unit that collects and processes said values, appropriately programmed;
- means to issue a warning message when said estimated value of residual life of the component exceeds a threshold value.

9. Device as claimed in claim 8, **characterized in that** said means to issue a warning message comprise one or more of the following means:

- a warning lamp on the instrument panel of the vehicle;
- indication means of the residual life values of the component;
- Indication means of the plans for vehicle return to the garage, dynamically updated, on the basis of said residual life values of the component.

10. Computer program comprising program coding means suitable to implement the steps of claims 1 to 7, when said program is made to run on a computer.

11. Computer readable means comprising a recorded message, said means readable by computers comprising program coding means suitable to implement the steps of claims 1 to 7, when said program is made to run on a computer.

**Patentansprüche**

1. Verfahren zur prediktivem Verschleißanalyse einer Komponente, die in einem Fahrzeug verwendet wird, insbesondere einem Nutzfahrzeug, **dadurch gekennzeichnet, dass** das Verfahren die folgenden Schritte umfasst:

- Initialisierung: Parameter werden für die zu analysierende Komponente zur Verfügung gestellt, welche zumindest eines der folgenden identifizieren: Merkmale bezüglich des Beginns der Lebensdauer; Merkmale bezüglich des Endes der Lebensdauer; Warnungs- und Lebensdauerende-Schwellen der Komponente; Fahrzeugverwendungstyp und Konfigurationskoeffizienten;
- Datenerfassung: Messungen von Größen bezüglich der verwendeten Komponenten werden in regelmäßigen und vorbestimmten Zeitintervallen durchgeführt, welche statistisch akkumuliert werden;
- Aktualisierung und Speicherung in statistischen Akkumulatoren: Speicherung der Messungen als Ereignisse, die zu den Detektionszeiten auftreten, d. h. der Häufigkeit, mit welcher die Messungen innerhalb Schwellen vorbestimmter Werte fallen;
- Projektion und Prüfung der Restlebensdauer der Komponente: die Restlebensdauerwerte, oder ihre Kehrwerte als Abnutzungsniveaus, werden gespeichert; eine Abnutzungsrate wird berechnet auf die Gesamtheit dieser Werte und ein Schätzwert der Restlebensdauer der Komponente wird erhalten, indem er mit den Restbetriebswerten korreliert wird,

wobei der Schritt der Projektion und Prüfung der Restlebensdauer der Komponenten die folgenden Schritte umfasst:

- Projektion der Restlebensdauer der Komponente: die durchgeführten Messungen werden analytisch durch statistische Berechnung ausgewertet, durch welche eine mathematische Funktion "f(Fahrzeugmessungen)" bestimmt wird, welche ein Verschlechterungsmodell ausdrückt, d. h., welches die Restlebensdauer der Komponente beschreibt;
- Prüfung, ob die Restlebensdauer der Komponente sich ihrem Ende nähert: die Werte, welche die Restlebensdauer beschreiben, oder die Abnutzungsniveaus als deren Umkehrwerte, werden wiederum gespeichert, wobei aufeinanderfolgende Stichproben der Schätzungen, zumindest die aktuellsten, der verschiedenen Werte der Funktion "f(Fahrzeugmessungen)" gespeichert werden; eine Abnutzungsgeschwindigkeit wird bestimmt aus der Gesamtheit der aufeinanderfolgenden Werte, und somit eine Vorhersage, wann der Restlebensdauerwert ein vorbestimmtes Ende einer Lebensdauerschwelle überschreiten wird, so dass der Schätzwert der Restlebensdauer der Komponente erhalten wird,

**dadurch gekennzeichnet, dass** im Fall einer Fahrzeugkupplungskomponente die mathematische Funktion "f(Fahrzeugmessungen)" bestimmt wird auf Grundlage der folgenden Funktionen, erhalten durch Analyse der Daten, die in den statistischen Akkumulatoren gespeichert werden:

$$[1] \quad \Delta mm^3 \text{ verloren für jeden Zyklus} = f(\text{Fahrstil}) * \text{aufgewendetes MJ,}$$

oder

$$[2] \quad \Delta mm^3 \text{ verloren für jeden Zyklus} = f(\text{Fahrzeugeinsatz}) * f(\text{aufgewendete Energie})$$
$$* f(\text{T Kupplungsbenutzungen}) = f(\text{Fahrzeugmessungen}),$$

wobei

- "aufgewendete Energie" eine endliche Energiemenge (MJ) ist,
- die Funktion f(Fahrzeugeinsatz) die Art des Fahrzeugeinsatzes beschreibt und ein Korrekturkoeffizient ist,
- f(Fahrzeugmessung) ein Verschlechterungsmodell ist.

2. Verfahren gemäß Anspruch 1, **dadurch gekennzeichnet, dass** die Schätzung der Restlebensdauer der Kupplung bezeichnet durch:

$$[3] \quad \text{Zeit} = f(\text{Fahrstil}) * \Delta mm^3 \text{ verloren für jeden Zyklus} * \text{Anzahl der Kupplungsbenutzungen,}$$

$$[4] \quad mm^3\_\text{Rest} = mm^3\_\text{Anfang} - \Delta mm^3 \text{ verloren für jeden Zyklus}$$

$$[5] \quad \text{Kupplungsrestlebensdauer} = K - f(\text{Fahrzeugeinsatz}) * f(\text{Fahrzeugmessungen})$$

wobei:

- K = Zustand der neuen Kupplung (z. B. Dicke oder $mm^3$ Material).

3. Verfahren gemäß Anspruch 1, **dadurch gekennzeichnet, dass** die statistische Berechnung durchgeführt wird unter Verwendung von einer der Methoden, die als "best-fit" oder "$X^2$ Chi$^2$" bezeichnet werden.

4. Verfahren gemäß Anspruch 1, **dadurch gekennzeichnet, dass** der Initialisierungsschritt ferner die Initialisierung von Zähl- / Prüfungs- / Berechnungs-Registern und die Herstellung der Messeinheit umfasst, in welcher die Restlebensdauer bezeichnet wird.

5. Verfahren gemäß Anspruch 1, **dadurch gekennzeichnet, dass** in dem Datenerfassungsschritt die Messungen der Größe Messungen sowohl intrinsischer Merkmale der untersuchten Komponente als auch Fahrzeugwerte umfasst.

6. Verfahren gemäß Anspruch 1, **dadurch gekennzeichnet, dass** der Schätzwert der Restlebensdauer der Komponente ausgedrückt wird in Betriebsstunden oder zurückzulegenden Restkilometern.

**7.** Verfahren gemäß einem der vorhergehenden Ansprüche, **dadurch gekennzeichnet, dass** es einen Schritt zur Ausgabe einer Warnmitteilung umfasst, wenn der Schätzwert der Restlebensdauer der Komponente einen Schwellwert überschreitet.

**8.** Vorrichtung zur Implementierung des Verfahrens gemäß einem der vorhergehenden Ansprüche, **gekennzeichnet durch**:

- Sensoren, Aktuatoren oder Detektoren der gemessenen Werte;
- zumindest eine Fahrzeugsteuereinheit, welche die Werte sammelt und verarbeitet und entsprechend programmiert ist;
- Mittel zur Ausgabe einer Warnmitteilung, wenn der Schätzwert der Restlebensdauer der Komponente einen Schwellwert überschreitet.

**9.** Vorrichtung gemäß Anspruch 8, **dadurch gekennzeichnet, dass** die Mittel zur Ausgabe einer Warnmitteilung eines oder mehrerer der folgenden Mittel umfasst:

- eine Warnlampe auf dem Armaturenbrett des Fahrzeugs;
- Anzeigemittel über die Restlebensdauerwerte der Komponente;
- Anzeigemittel für Pläne zur Rückführung des Fahrzeugs in eine Werkstatt, welche dynamisch auf Grundlage der Restlebensdauer an der Komponente aktualisiert werden.

**10.** Computerprogramm, umfassend Programmcodemittel geeignet zur Durchführung c, der Schritte der Ansprüche 1 bis 7, welches Programm zur Ausführung auf einen Computer vorgesehen ist.

**11.** Computerlesbare Mittel, umfassend eine aufgezeichnete Mitteilung, welche Mittel durch Computer lesbar sind, welche Programmcodemittel umfassen, die dazu geeignet sind, die Schritte der Ansprüche 1 bis 7 auszuführen, wenn dieses Programm auf einem Computer ausgeführt wird.

**Revendications**

**1.** Procédé pour l'analyse prédictive de l'usure d'un composant en utilisation sur un véhicule, en particulier un véhicule industriel ou utilitaire, **caractérisé en ce qu'**il comprend les étapes qui suivant :

- initialisation : des paramètres sont fournis pour ledit composant à analyser, lesquels paramètres identifient au moins : des caractéristiques de début de vie ; des caractéristiques de fin de vie ; des seuils d'avertissement et de fin de vie du composant ; un type de mission et des coefficients de configuration du véhicule ;
- acquisition de données : des mesures de grandeurs relatives auxdits composants en utilisation sont effectuées selon des intervalles temporels réguliers et prédéterminés, lesquelles mesures sont accumulées statistiquement ;
- mise à jour et sauvegarde dans des accumulateurs statistiques : stockage des mesures effectuées en tant qu'événements survenant aux instants de détection, c'est-à-dire le nombre de fois où lesdites mesures tombent à l'intérieur de seuils de valeurs prédéterminées ;
- projection et vérification de la durée de vie résiduelle du composant : les valeurs de durée de vie résiduelle ou leurs inverses, à savoir les niveaux d'usure, sont archivé(e)s ; un taux d'usure est calculé sur le total desdites valeurs, et une valeur estimée de la durée de vie résiduelle du composant est obtenue en corrélant ce taux d'usure avec des valeurs de fonctionnement opérationnel résiduel,

ladite étape de projection et de vérification de la durée de vie résiduelle des composants comprend les étapes de :

- projection de la durée de vie résiduelle du composant : lesdites mesures effectuées sont interprétées analytiquement par l'intermédiaire d'un calcul statistique, interprétation au moyen de laquelle une fonction mathématique "f(mesures de véhicule) " est déterminée, laquelle fonction exprime un modèle de détérioration, c'est-à-dire qu'elle indique la durée de vie résiduelle du composant ;
- vérification de si la durée de vie résiduelle du composant est proche de son terme ou non : lesdites valeurs indiquant la durée de vie résiduelle ou leurs inverses, à savoir les niveaux d'usure, sont tour à tour archivé(e)s, en stockant des échantillons successifs des estimations, au moins les plus récents, des diverses valeurs de la fonction "f(mesures de véhicule)" ; une vitesse d'usure est déterminée à partir du total desdites valeurs successives et par conséquent, une prédiction de lorsque la valeur de durée de vie résiduelle excédera un seuil de fin de vie prédéterminé est déterminée, d'où ainsi l'obtention de ladite valeur estimée de la durée de vie résiduelle du composant,

**caractérisé en ce que**, dans le cas du composant d'embrayage du véhicule, ladite fonction mathématique "f(mesures de véhicule)" est déterminée sur la base des fonctions qui suivent, obtenues à partir d'une analyse des données stockées dans lesdits accumulateurs statistique :

$$[1] \; \Delta mm^3 \; \text{perdus pour chaque cycle} = f(\text{style de conduite}) * MJ \; \text{mis en jeu ou}$$

$$[2] \; \Delta mm^3 \; \text{perdus pour chaque cycle} = f(\text{mission du véhicule}) * f(\text{énergie mise en jeu}) * f(T \; \text{utilisations de l'embrayage}) = f(\text{mesures de véhicule}),$$

où :

- "énergie mise en jeu" est une quantité d'énergie finie (MJ),
- la fonction f(mission du véhicule) qui fournit l'indication du type de mission pour lequel le véhicule roule est un coefficient de correction, et
- f(mesures de véhicule) est un modèle de détérioration.

2. Procédé selon la revendication 1, **caractérisé en ce que** ladite estimation de durée de vie résiduelle de l'embrayage est indiquée en :

$$[3] \; Temps = f(\text{style de conduite}) * \Delta mm^3 \; \text{perdus pour chaque cycle} * \text{nombre d'utilisations de l'embrayage},$$

$$\{4\} \; mm^3\_résiduel = mm^3\_initial - \Delta mm^3 \; \text{perdus pour chaque cycle},$$

$$[5] \; \text{Durée de vie résiduelle de l'embrayage} = K - f(\text{mission du véhicule}) * f(\text{mesures de véhicule}),$$

où :

- K = Etat du nouvel embrayage (c'est-à-dire son épaisseur ou les $mm^3$ de matériau).

3. Procédé selon la revendication 1, **caractérisé en ce que** ledit calcul statistique est effectué en utilisant n'importe lequel des procédés appelés "meilleur ajustement" ou "$\chi^2$ Chi au carré".

4. Procédé selon la revendication 1, **caractérisé en ce que** ladite étape d'initialisation comprend également une initialisation de registres de comptage/vérification/calcul et un établissement de l'unité de mesure dans laquelle la durée de vie résiduelle sera exprimée.

5. Procédé selon la revendication 1, **caractérisé en ce que**, au niveau de ladite étape d'acquisition de données, lesdites mesures de dimension comprennent des mesures à la fois de caractéristiques intrinsèques du composant qui est en train d'être examiné et de valeurs de véhicule.

6. Procédé selon la revendication 1, **caractérisé en ce que** ladite valeur estimée de la durée de vie résiduelle du composant est exprimée en terme d'heures de fonctionnement opérationnel ou de kms résiduels à parcourir.

**7.** Procédé selon l'une quelconque des revendications précédentes, **caractérisé en ce qu'**il comprend également une étape consistant à délivrer un message d'avertissement lorsque ladite valeur de durée de vie résiduelle estimée du composant excède une valeur de seuil.

**8.** Dispositif pour la mise en oeuvre du procédé selon l'une quelconque des revendications précédentes, **caractérisé en ce qu'**il comprend :

- des capteurs, des actionneurs ou des détecteurs des valeurs mesurées ;
- au moins une unité de commande de véhicule qui collecte et traite lesdites valeurs, programmée de manière appropriée ; et
- un moyen pour délivrer un message d'avertissement lorsque ladite valeur de durée de vie résiduelle estimée du composant excède une valeur de seuil.

**9.** Dispositif selon la revendication 8, **caractérisé en ce que** ledit moyen pour délivrer un message d'avertissement comprend un ou plusieurs des moyens qui suivant :

- un voyant d'avertissement sur le tableau de bord du véhicule ;
- un moyen d'indication des valeurs de durée de vie résiduelle du composant ;
- un moyen d'indication des planifications pour un retour du véhicule au garage, mis à jour de manière dynamique, sur la base desdites valeurs de durée de vie résiduelle du composant.

**10.** Programme d'ordinateur comprenant un moyen de codage par programme qui convient pour la mise en oeuvre des étapes selon les revendications 1 à 7, lorsque ledit programme est lancé en exécution sur un ordinateur.

**11.** Moyen lisible par ordinateur comprenant un message enregistré, ledit moyen lisible par des ordinateurs comprenant un moyen de codage par programme qui convient pour la mise en oeuvre des étapes selon les revendications 1 à 7, lorsque ledit programme est lancé en exécution sur un ordinateur.

**FIG. 1**

| Statistical accumulators for the clutch component | | | | | | | | | |
|---|---|---|---|---|---|---|---|---|---|
| ITEM: 1 | f (X = engine oil temperature [deg C]) | | | | | | | | |
| limits:(n<a)(a=>n<b)(n=>b) | <10 | .......... | 40..50 | 50..60 | 60..70 | 70..80 | 80..85 | .......... | >113 |
| Engine Operation Time [sec] | 0 | .......... | 448,5 | 792 | 195,5 | 153,5 | 151,5 | .......... | 0 |
| Distance Travelled [m] | 0 | .......... | 0 | 17 | 1111 | 1990 | 2459 | .......... | 0 |
| ITEM: 2 | f (X =coolant temperature [deg C]) | | | | | | | | |
| limits:(n<a)(a=>n<b)(n=>b) | <10 | .......... | 40..50 | 50..60 | 60..70 | 70..80 | 80..90 | .......... | >110 |
| Engine Operation Time [sec] | 0 | .......... | 435,5 | 732 | 247 | 188,5 | 3961,5 | .......... | 0 |
| Distance Travelled [m] | 0 | .......... | 0 | 4 | 637 | 1575 | 91549 | .......... | 0 |
| ITEM: 3 | | | | | | | | | |
| Total Mean Number of Engine Revolutions [rev] | 145428 | | | | | | | | |
| ITEM: 4 | | | | | | | | | |
| Total Distance Travelled [m] | 93765 | | | | | | | | |
| ITEM: 5 | | | | | | | | | |
| Total Engine Operation Time [sec] | 6061,5 | | | | | | | | |
| ITEM: 6 | f (X = output value of boost pressure sensor [hPa]) | | | | | | | | |
| limits:(n<a)(a=>n<b)(n=>b) | <800 | .......... | 1600..1800 | 1800..2000 | 2000..2200 | 2200..2400 | 2400..2600 | .......... | >3300 |
| Engine Operation Time [sec] | 0 | .......... | 904 | 477,5 | 322,5 | 178 | 17,5 | .......... | 0 |
| Distance Travelled [m] | 0 | .......... | 21731 | 11298 | 7409 | 4091 | 246 | .......... | 0 |
| ITEM: 7 | f (X = ambient temperature [deg C]) | | | | | | | | |
| limits:(n<a)(a=>n<b)(n=>b) | <10 | .......... | 10..15 | 15..20 | .......... | 35..40 | >40 | | |
| Engine Operation Time [sec] | 0 | .......... | 2376,5 | 3685 | .......... | 0 | 0 | | |
| Distance Travelled [m] | 0 | .......... | 9944 | 83821 | .......... | 0 | 0 | | |

## FIG. 2.1

EP 2 075 663 B1

| ITEM: 8 | f (X = mean engine speed [rpm]) | | | | | | | | |
|---|---|---|---|---|---|---|---|---|---|
| limits:(n<a)(a=>n<b)(n=>b) | 400..800 | 800..1000 | 1000..1200 | 1200..1400 | ......... | 2400..2500 | 2500..2600 | 2600..2800 | >2800 |
| Engine brake activation [sec] | 0 | 0 | 0 | 0 | ......... | 0 | 0 | 0 | 0 |
| Consumo ML [ml] | 767,46 | 85,98 | 90,95 | 283,39 | ......... | 26,49 | 8,4 | 0 | 7,88 |

| ITEM: 9 | f (X = vehicle speed [km/h]) | | | | | | | | |
|---|---|---|---|---|---|---|---|---|---|
| limits:(n<a)(a=>n<b)(n=>b) | 0..10 | 10..20 | 20..30 | 30..40 | ......... | 90..100 | 100..110 | 110..120 | >120 |
| Engine brake activation [sec] | 0 | 0 | 0 | 0 | ......... | 25 | 0 | 0 | 0 |
| Consumption ML [ml] | 895,05 | 90,83 | 159,97 | 353,42 | ......... | 6077,46 | 0 | 0 | 0 |

| ITEM: 10 | Engine Operation Time [sec] f (X = mean engine speed [rpm], Y = torque percentage consumption) | | | | | | | | |
|---|---|---|---|---|---|---|---|---|---|
| limits:(n<a)(a=>n<b)(n=>b) | 400..800 | 800..1000 | 1000..1200 | 1200..1400 | ......... | 2400..2500 | 2500..2600 | 2600..2800 | >2800 |
| 950..1000 | 0 | 0 | 0 | 0 | ......... | 0 | 0 | 0 | 0 |
| 900..950 | 0 | 0 | 0 | 0 | ......... | 0 | 0 | 0 | 0 |
| ......... | | | | | | | | | |
| 450..500 | 0,5 | 2 | 3 | 8 | ......... | 0 | 0 | 0 | 0 |
| 400..450 | 0,5 | 0 | 0 | 9 | ......... | 0 | 0 | 0 | 0,5 |
| 350..400 | 0 | 0 | 0 | 5 | ......... | 1 | 0 | 0 | 0 |
| 300..350 | 0,5 | 0 | 0 | 4,5 | ......... | 0,5 | 0 | 0 | 0,5 |
| 250..300 | 0,5 | 1 | 1 | 4 | ......... | 0 | 0 | 0 | 0,5 |
| 200..250 | 1,5 | 10 | 1 | 8 | ......... | 0 | 0 | 0 | 0 |
| 150..200 | 20 | 35 | 5 | 2,5 | ......... | 0 | 0 | 0 | 0 |
| 100..150 | 1670,5 | 50 | 2,5 | 6,5 | ......... | 0,5 | 0 | 0 | 0 |
| 50..100 | 115 | 5 | 0,5 | 9 | ......... | 0 | 0 | 0 | 0 |
| 0..50 | 7 | 21,5 | 31,5 | 37 | ......... | 1 | 0,5 | 0 | 0 |

| ITEM: 11 | | | | | | | | | |
|---|---|---|---|---|---|---|---|---|---|
| Max engine oil temperature [deg C] | 93,7 | | | | | | | | |

<div align="center">

## FIG. 2.2

</div>

| ITEM: 12 | | | | | | | | | |
|---|---|---|---|---|---|---|---|---|---|
| Initial engine oil temperature [deg C] | 18,9 | | | | | | | | |

| ITEM: 13 | Engine Operation Time [sec] f(X = engine oil temperature [deg C], Y = mean engine speed [rpm]) | | | | | | | | |
|---|---|---|---|---|---|---|---|---|---|
| limits:(n<a)(a=>n<b)(n=>b) | <10 | .......... | 50..60 | 60..70 | 70..80 | 80..85 | 85..90 | .......... | >113 |
| >2800 | 0 | ......... | 0 | 15 | 0 | 0 | 0 | ......... | 0 |
| 2600..2800 | 0 | ......... | 0 | 0 | 0 | 0 | 0 | ......... | 0 |
| 1600..1700 | 0 | ......... | 0 | 13 | 15,5 | 0,5 | 356,5 | ......... | 0 |
| 1500..1600 | 0 | ......... | 0 | 12,5 | 10 | 0 | 384,5 | ......... | 0 |
| 1400..1500 | 0 | ......... | 1 | 12 | 7 | 0 | 71 | ......... | 0 |
| 1200..1400 | 0 | ......... | 4,5 | 24 | 21 | 0 | 83 | ......... | 0 |
| 1000..1200 | 0 | ......... | 9,5 | 5 | 23,5 | 0 | 26,5 | ......... | 0 |
| 800..1000 | 0 | ......... | 17 | 20,5 | 5 | 1,5 | 18 | ......... | 0 |
| 400..800 | 0 | ......... | 760 | 59,5 | 12,5 | 54 | 32,5 | ......... | 0 |

| ITEM: 14 | Clutch Energy [energy] f (X = Clutch time [sec], Y = Clutch Start Speed [Km/h]) | | | | | | | | |
|---|---|---|---|---|---|---|---|---|---|
| limits:(n<a)(a=>n<b)(n=>b) | 0..1 | 1..2 | 2..3 | 3..4 | 4..5 | 5..6 | 6..7 | ......... | >16 |
| >2 | 4878 | 5751 | 3983 | 2069 | 2549 | 1476 | 3482 | ......... | 0 |
| 0..2 | 415 | 932 | 2674 | 473 | 306 | 2417 | 2995 | ......... | 0 |

| ITEM: 15 | Clutch use f (X = Clutch Time [sec], Y = Clutch Start Speed [Km/h]) | | | | | | | | |
|---|---|---|---|---|---|---|---|---|---|
| limits:(n<a)(a=>n<b)(n=>b) | 0..1 | 1..2 | 2..3 | 3..4 | 4..5 | 5..6 | 6..7 | ......... | >16 |
| >2 | 24 | 22 | 12 | 2 | 2 | 3 | 3 | ......... | 0 |
| 0..2 | 12 | 7 | 8 | 2 | 1 | 1 | 1 | ......... | 0 |

FIG. 2.3

EP 2 075 663 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004049161 A